# FASCICULE DE BREVET EUROPEEN

(11) **EP 2 892 807 B1**
(45) Date de publication et mention de la délivrance du brevet: **24.08.2016**
(21) Numéro de dépôt: 13767040.2
(22) Date de dépôt: 09.09.2013
(51) Int. Cl.: B64D 41/00

(54) **PANNEAU RAIDI ET SON PROCÉDÉ DE FABRICATION**
VERSTEIFTES PANEEL UND DESSEN HERSTELLUNGSVERFAHREN
REINFORCED PANEL AND ITS METHOD OF PRODUCTION

(30) Priorité: 10.09.2012 FR 1258480
(43) Date de publication de la demande: 15.07.2015
(73) Titulaire: Airbus Group SAS, 75016 Paris (FR)
(72) Inventeur: BERMUDEZ, Michel, F-92150 Suresnes (FR); MESNAGE, Didier, F-92210 Saint Cloud (FR); SMAOUI, Hichem, F-75014 Paris (FR); FLEURY, Benoît, F-92150 Suresnes (FR)
(74) Mandataire: Ipside
(86) Numéro de dépôt international: PCT/FR2013/052069
(87) Numéro de publication internationale: WO 2014/037678

(56) Documents cités:
- FR-A1- 2 898 539
- US-A1- 2003 169 558

## Description

La présente invention se rapporte à un panneau raidi. L'invention trouve son application dans le domaine aéronautique.

L'évolution des aéronefs vers une utilisation plus importante de consommateurs électriques a considérablement augmenté les besoins en énergie et en puissance électriques. Pour répondre à ces nouveaux besoins, il a notamment été développé des systèmes dans lesquels l'énergie électrique nécessaire est stockée à bord de l'aéronef avant l'envol. Dans cette optique, des packs de supercondensateurs ont par exemple été introduits. De tels packs sont par exemple décrits dans le document US5793603.

Cependant, il est nécessaire, avec de tels systèmes, d'optimiser la densité d'énergie et de puissance pour en réduire la masse et le volume, de sorte à permettre l'allégement de la masse des aéronefs et donc la diminution de leur impact environnemental.

Il existe donc un besoin de réduire la masse et le volume de tels systèmes en améliorant la densité d'énergie et de puissance fournies par lesdits systèmes.

Un aspect de la présente invention permet de résoudre ce premier problème technique.

Il est classique qu'un panneau raidi comporte une peau et au moins un raidisseur sensiblement allongé, comprenant une rainure disposée dans le sens longitudinal et formant avec la peau une cavité. Un tel panneau raidi est généralement fabriqué par drapage sur un noyau d'outillage dont la forme est complémentaire avec la cavité et qui est retiré, une fois la fabrication terminée. L'opération de retrait du noyau d'outillage est par exemple décrite dans le document FR2898539 de la Demanderesse.

Cependant, le retrait du noyau d'outillage est particulièrement problématique, notamment lorsque le raidisseur est à double courbure. En effet, une telle opération nécessite beaucoup de temps et de moyens.

Il existe donc un besoin de simplifier le procédé de fabrication d'un tel panneau raidi, notamment l'opération de retrait du noyau d'outillage, de sorte à en réduire le temps et le coût.

Un aspect de la présente invention permet de résoudre ce deuxième problème technique.

Le document US2003/0169558 est également connu de l'état de la technique.

Plus précisément un objet de la présente invention est un procédé de fabrication d'un panneau raidi comprenant une peau et au moins un raidisseur sensiblement allongé, ledit au moins un raidisseur comprenant une rainure disposée dans le sens longitudinal et formant avec la peau une cavité, ledit panneau comportant au moins un moyen de stockage et de restitution d'énergie électrique disposé à l'intérieur de la cavité, ledit procédé comprenant une étape de remplissage de la rainure de l'au moins un raidisseur par au moins un moyen de stockage et de restitution d'énergie électrique ; et une étape de recouvrement de l'au moins un moyen de stockage et de restitution d'énergie électrique par la peau, de sorte que la rainure du raidisseur et la peau forment ensemble la cavité.

L'utilisation d'un tel panneau raidi a pour avantage de permettre d'une part un gain de masse en économisant la masse qui aurait été nécessaire pour encapsuler l'au moins un moyen de stockage et de restitution d'énergie électrique, et d'autre part un gain de volume en utilisant le volume de la cavité du panneau raidi jusqu'ici inoccupé.

De plus, un tel panneau raidi a pour avantage de pouvoir être placé au plus proche du système à alimenter en énergie électrique.

Enfin, la présence de l'au moins un moyen de stockage et de restitution d'énergie électrique dans la cavité du raidisseur présente l'avantage de modifier la réponse acoustique de la structure. Il est donc possible d'éviter d'utiliser des dispositifs d'atténuation de bruit, permettant ainsi un gain de masse supplémentaire.

Préférentiellement, l'au moins un moyen de stockage et de restitution d'énergie électrique forme un noyau sur lequel la peau est drapée, lors de l'étape de recouvrement de l'au moins un moyen de stockage et de restitution d'énergie électrique.

Un tel procédé présente l'avantage d'utiliser comme noyau d'outillage au moins un moyen de stockage et de restitution d'énergie électrique qu'il n'est pas nécessaire de retirer une fois la fabrication du panneau raidi terminée.

Plus préférentiellement, le raidisseur comporte un matériau composite ; l'étape de remplissage de la rainure du raidisseur est réalisée avec un raidisseur pré-polymérisé ; et l'étape de drapage se poursuit par une étape de cuisson du panneau raidi.

Selon un mode de réalisation de l'invention, l'étape de remplissage de la rainure du raidisseur est réalisée par empilements successifs d'une couche d'électrode et d'une couche du moyen d'isolation électrique poreux sensiblement parallèlement à la surface de la peau formant avec la rainure de l'au moins un raidisseur la cavité.

Selon un autre mode de réalisation de l'invention, le procédé comprend, préalablement à l'étape de remplissage de la rainure du raidisseur, une étape d'empilements successifs d'une couche d'électrode et d'une couche du moyen d'isolation électrique poreux, puis une étape d'enroulement de l'empilement réalisé autour d'un noyau de forme sensiblement complémentaire avec la cavité.

Préférentiellement, le procédé comprend en outre une étape dans laquelle les couches d'électrode sont munies de moyens pour collecter l'énergie électrique ; une étape dans laquelle les moyens pour collecter l'énergie électrique d'un même pôle sont reliés ensemble à un tuyau creux comportant une ouverture en vis-à-vis de l'au moins un moyen de stockage et de restitution d'énergie électrique ; une étape dans laquelle l'électrolyte est injecté dans ledit tuyau de sorte à imprégner les couches d'électrode ; et une étape dans laquelle le tuyau est obstrué.

La mise en place d'un tel tuyau creux présente l'avantage d'éviter la présence d'un opercule directement dans la structure du raidisseur, permettant ainsi de gagner en simplicité et en tenue mécanique dudit raidisseur.

L'invention a également pour objet un panneau raidi comprenant une peau et au moins un raidisseur sensiblement allongé, ledit au moins un raidisseur comprenant une rainure disposée dans le sens longitudinal et formant avec la peau une cavité, ledit panneau comportant au moins un moyen de stockage et de restitution d'énergie électrique disposé à l'intérieur de la cavité, ledit panneau raidi étant issu d'un procédé tel que précédemment décrit.

Préférentiellement, l'au moins un moyen de stockage et de restitution d'énergie électrique est disposé à l'intérieur de la cavité de sorte à épouser des parois de ladite cavité.

Un tel moyen de stockage et de restitution d'énergie électrique a pour avantage de former un noyau facilitant la fabrication du panneau raidi.

Préférentiellement, l'au moins un moyen de stockage et de restitution d'énergie électrique est un supercondensateur.

L'utilisation d'un supercondensateur présente l'avantage de permettre de stocker, à masse égale, une quantité d'énergie intermédiaire entre une batterie et un condensateur, pour une restitution d'énergie plus rapide qu'une batterie.

Selon un mode de réalisation de l'invention, le supercondensateur comporte deux couches d'électrode disposées sensiblement parallèlement à une surface de la peau, lesdites couches étant séparées entre elles par une couche d'un moyen d'isolation électrique poreux.

Préférentiellement, les couches du supercondensateur sont munies, à des extrémités opposées dans le sens transversal, d'un moyen d'étanchéisation entre les couches d'électrode, de sorte qu'un électrolyte dont sont imprégnées les couches d'électrode ne puisse s'écouler qu'à travers la couche du moyen d'isolation électrique poreux.

L'utilisation d'un tel moyen d'étanchéisation a pour avantage de forcer l'écoulement de l'électrolyte à travers la couche du moyen d'isolation électrique poreux, et donc de permettre un meilleur fonctionnement du supercondensateur.

Préférentiellement, deux couches d'électrodes consécutives sont munies de moyens pour collecter l'énergie électrique, lesdits moyens étant disposés à l'opposé l'un de l'autre dans le sens transversal.

Une telle disposition des moyens pour collecter l'énergie électrique a pour avantage de simplifier la connexion des moyens de même pôle.

Selon un autre mode de réalisation de l'invention, le supercondensateur comporte deux couches d'électrode sensiblement disposées en spirale, lesdites couches étant séparées entre elles par une couche d'un moyen d'isolation électrique poreux.

Préférentiellement, deux couches d'électrode consécutives font saillie l'une par rapport à l'autre dans le sens longitudinal, lesdites saillies étant munies de moyens pour collecter l'énergie électrique.

Une telle disposition des couches d'électrode a pour avantage de simplifier la connexion des moyens pour collecter l'énergie électrique de même pôle.

L'invention sera mieux comprise à la lecture de la description qui suit et à l'examen des figures qui l'accompagnent. Celles-ci sont données à titre indicatif et nullement limitatif de l'invention. Les figures montrent :
- Figure 1 : une vue d'ensemble d'un panneau raidi selon un mode de réalisation de l'invention ;
- Figures 2a et 2b : des vues de détail du panneau raidi selon le mode de réalisation de l'invention présenté à la figure 1.

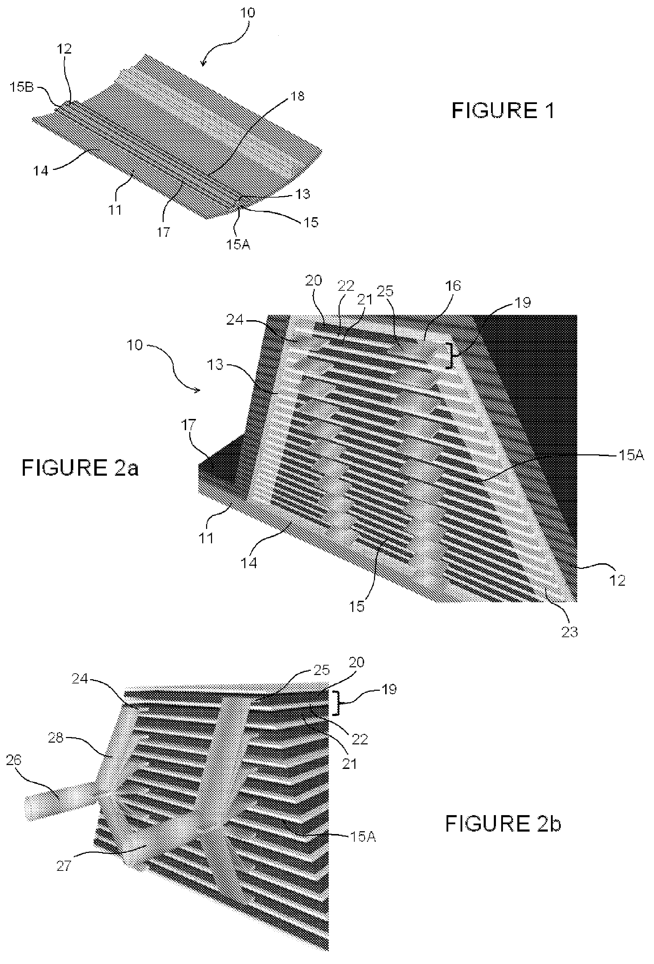

Les figures 1, 2a et 2b montrent respectivement une vue d'ensemble et des vues de détail d'un panneau 10 raidi selon un mode de réalisation de l'invention.

Le panneau 10 raidi comporte une peau 11. La peau 11 est par exemple le fuselage d'un aéronef, tel qu'un avion. La peau 11 peut être sensiblement plane, à simple courbure ou à double courbure. Dans l'exemple, la peau 11 est à simple courbure.

Le panneau 10 raidi comporte en outre au moins un raidisseur 12. Le raidisseur 12 comporte par exemple un matériau composite. Le raidisseur 12 a une forme sensiblement allongée selon une première direction. La première direction correspond dans la suite de la description à un sens dit longitudinal.

Le raidisseur 12 comporte une rainure 13 disposée dans le sens longitudinal. Une surface 14 de la peau 11 recouvre la rainure 13 du raidisseur 12. Ainsi, l'assemblage de la peau 11 et de la rainure 13 forme une cavité 15. De préférence, la rainure 13 comprend un fond 16 disposé sensiblement parallèlement à la surface 14 de la peau 11.

De préférence, la cavité 15 est fermée à chaque extrémité (15A, 15B) dans le sens longitudinal. Une première extrémité 15A de la cavité 15 est représentée aux figures 2a et 2b.

De préférence, le raidisseur 12 comporte à chaque extrémité de la rainure 13, dans un sens dit transversal, des ailettes (17, 18). Les ailettes (17, 18) sont configurées de sorte à épouser la surface 14 de la peau 11. De cette manière, la peau 11 et le raidisseur 12 adhèrent l'un avec l'autre au niveau des ailettes (17, 18).

La cavité 15 accueille au moins un moyen 19 de stockage et de restitution d'énergie électrique. Un volume occupé par l'au moins un moyen 19 de stockage et de restitution d'énergie électrique dans la cavité 15 est sensiblement égal à un volume interne de la cavité 15. De cette manière, l'au moins un moyen 19 de stockage et de restitution d'énergie électrique épouse des parois de la cavité 15.

De préférence, l'au moins un moyen 19 de stockage et de restitution d'énergie électrique est un supercondensateur. Le supercondensateur 19 comprend deux couches (20, 21) d'électrode séparées entre elles par une couche 22 d'un moyen d'isolation électrique poreux. Les couches (20, 21) d'électrodes sont par exemple des feuilles d'aluminium recouvertes d'un dépôt de charbon actif, et la couche 22 du moyen d'isolation électrique poreux est par exemple en cellulose. Les couches (20, 21) d'électrode sont imprégnées d'un électrolyte de préférence liquide, comme par exemple du carbonate de propylène ou de l'acétonitrile.

Dans l'exemple présenté aux figures 2a et 2b, la cavité 15 accueille plusieurs supercondensateurs 19. Les supercondensateurs 19 sont disposés les uns par rapport aux autres de sorte qu'une couche (20, 21) d'électrode serve simultanément à deux supercondensateurs.

Selon le mode de réalisation de l'invention présenté aux figures 2a et 2b, les couches (20, 21, 22) d'électrode et du moyen d'isolation électrique poreux sont disposées sensiblement parallèlement à la surface 14 de la peau 11.

De préférence, des extrémités des couches (20, 21, 22) d'électrode et du moyen d'isolation électrique poreux selon le sens transversal sont munies d'un moyen 23 d'étanchéisation entre lesdites couches, de sorte que l'électrolyte ne puisse s'écouler qu'à travers la couche 22 du moyen d'isolation électrique poreux. Le moyen 23 d'étanchéisation est par exemple de la colle en film ou de la résine liquide.

Selon un autre mode de réalisation de l'invention, les couches (20, 21, 22) d'électrode et du moyen d'isolation électrique poreux sont sensiblement disposées selon une spirale. De préférence, la spirale est de forme sensiblement complémentaire avec la cavité 15. Les couches (20, 21, 22) d'électrode et de moyen d'isolation électrique poreux sont par exemple disposées en spirale autour d'un noyau de forme sensiblement complémentaire avec la cavité 15.

Selon le mode de réalisation présenté aux figures 2a et 2b, les couches (20, 21) d'électrode sont munies à la première extrémité 15A de moyens (24, 25) pour collecter l'énergie électrique, par exemple sous forme de languettes. De préférence, les moyens (24, 25) pour collecter l'énergie électrique de deux couches (20, 21) d'électrode consécutives sont disposés à l'opposé l'un de l'autre dans le sens transversal. De cette manière, les moyens (24, 25) pour collecter l'énergie électrique de même pôle sont disposés à une même extrémité dans le sens transversal.

Selon une variante, la première de deux couches d'électrode consécutives est munie à la première ou à la deuxième extrémité (15A, 15B) d'un moyen pour collecter l'énergie électrique, et la deuxième est munie à la deuxième ou à la première extrémité (15B, 15A) d'un autre moyen pour collecter l'énergie électrique. De cette manière, les moyens (24, 25) pour collecter l'énergie électrique de même pôle sont disposés à une même extrémité (15A, 15B) dans le sens longitudinal. De préférence, deux couches d'électrode consécutives font saillie l'une par rapport à l'autre dans le sens longitudinal et les moyens pour collecter l'énergie électrique des couches d'électrode sont disposés sur lesdites saillies.

De préférence, les moyens pour collecter l'énergie électrique de même pôle sont sensiblement alignés entre eux.

Les moyens pour collecter l'énergie électrique de même pôle sont chacun reliés à un tube (26, 27) au moyen d'une branche 28. De préférence, au moins un des tubes (26, 27) est creux et comporte une ouverture disposée en vis-à-vis des supercondensateurs 19. De cette manière, l'électrolyte peut être introduit dans l'au moins un des tubes (26, 27) de sorte à venir imprégner les couches (20, 21) d'électrode. Dans l'exemple, chacun des tubes (26, 27) est creux et comporte une ouverture disposée en vis-à-vis des supercondensateurs 19.

Le panneau 10 raidi permet un gain de masse en économisant la masse qui aurait été nécessaire pour encapsuler les supercondensateurs 19, ainsi qu'un gain de volume en utilisant le volume de la cavité 15 du panneau 10 raidi jusqu'ici inoccupé. Le panneau 10 raidi présente en outre l'avantage de pouvoir être placé au plus proche du système à alimenter en énergie électrique, notamment à des endroits difficiles d'accès comme la pointe avant d'un avion.

Le panneau 10 raidi, tel que précédemment décrit, est fabriqué au moyen d'un moule présentant une surface sensiblement complémentaire de la surface 14 de la peau 11 et au moins une rainure sensiblement complémentaire de la rainure 13 du raidisseur 12.

Le raidisseur 12 est dans un premier temps placé dans l'au moins une rainure du moule. De préférence, le raidisseur 12 est pré-polymérisé, lorsque ledit raidisseur est placé dans le moule.

Puis, la rainure 13 du raidisseur 12 est remplie de supercondensateurs 19 par empilements successifs d'une couche 20 d'électrode, et d'une couche 22 du moyen d'isolation électrique poreux sensiblement parallèlement au fond 16 de la rainure 13. La rainure 13 est considérée comme « remplie » lorsqu'une couche des supercondensateurs 19 affleure la surface du moule.

Dans une variante, le remplissage de la rainure 13 du raidisseur 12 nécessite une première étape d'empilements successifs d'une couche d'électrode, et d'une couche du moyen d'isolation électrique poreux, puis une deuxième étape d'enroulement de l'empilement préalablement formé autour d'un noyau de forme sensiblement complémentaire avec les parois de la rainure 13 et la surface du moule, et enfin une troisième étape de mise en place des couches ainsi enroulées dans la rainure 13 du raidisseur 12.

Dans l'exemple, le moyen 23 d'étanchéisation est ensuite appliqué aux extrémités des couches (20, 21, 22) d'électrode et du moyen d'isolation électrique poreux dans le sens transversal, à l'interface entre la rainure 13 du raidisseur 12 et lesdites couches. Ce mode de réalisation est particulièrement adapté lorsque le moyen 23 d'étanchéisation est de la résine liquide. Dans une variante, le moyen 23 d'étanchéisation est appliqué aux extrémités de chacune des couches (20, 21, 22) d'électrode et du moyen d'isolation électrique poreux dans le sens transversal, avant l'empilement de ladite couche. Ce mode de réalisation est particulièrement adapté lorsque le moyen 23 d'étanchéisation est de la colle en film.

Puis, les moyens (24, 25) pour collecter l'énergie électrique sont placés sur chacune des couches d'électrode, et les moyens (24, 25) de même pôle sont chacun reliés à un tube (26, 27), de préférence par sertissage.

Les supercondensateurs 19 sont ensuite recouverts de la peau 11, de sorte que la rainure 13 du raidisseur 12 et la peau 11 forment ensemble l'orifice 15. De préférence, la peau 11 est drapée sur les supercondensateurs 19 formant un noyau, et le panneau 10 raidi ainsi formé est cuit en autoclave.

Dans l'exemple présenté aux figures 2a et 2b, l'électrolyte est ensuite injecté dans chacun des tuyaux (26, 27) de sorte à venir imprégner les couches (20, 21) d'électrode, puis les tuyaux (26, 27) sont obstrués par exemple par sertissage ou par brasage. Dans une variante, l'électrolyte n'est injecté que dans l'un des tuyaux, l'autre desdits tuyaux ayant été préalablement obstrué.

Le procédé de fabrication du panneau 10 raidi permet d'utiliser, pour le drapage de la peau 11, les supercondensateurs 19 comme noyau d'outillage sans qu'il soit nécessaire de les retirer une fois ladite fabrication terminée.

## Revendications

1. - Procédé de fabrication d'un panneau (10) raidi comprenant une peau (11) et au moins un raidisseur (12) sensiblement allongé, ledit au moins un raidisseur comprenant une rainure (13) disposée dans le sens longitudinal et formant avec la peau une cavité (15), ledit panneau comportant au moins un moyen (19) de stockage et de restitution d'énergie électrique disposé à l'intérieur de la cavité, ledit procédé comprenant une étape de remplissage de la rainure (13) de l'au moins un raidisseur (12) par au moins un moyen (19) de stockage et de restitution d'énergie électrique; et une étape de recouvrement de l'au moins un moyen de stockage et de restitution d'énergie électrique par la peau (11), de sorte que la rainure du raidisseur et la peau forment ensemble la cavité (15).

2. - Procédé selon la revendication 1, dans lequel l'au moins un moyen de stockage et de restitution d'énergie électrique forme un noyau sur lequel la peau est drapée, lors de l'étape de recouvrement de l'au moins un moyen de stockage et de restitution d'énergie électrique.

3. - Procédé selon la revendication 2, dans lequel :
- le raidisseur comporte un matériau composite ;
- l'étape de remplissage de la rainure du raidisseur est réalisée avec un raidisseur pré-polymérisé ; et,
- l'étape de drapage se poursuit par une étape de cuisson du panneau raidi.

4. - Procédé selon l'une des revendications 1 à 3, dans lequel l'étape de remplissage de la rainure du raidisseur est réalisée par empilements successifs d'une couche d'électrode et d'une couche du moyen d'isolation électrique poreux sensiblement parallèlement à la surface (14) de la peau formant avec la rainure de l'au moins un raidisseur la cavité.

5. - Procédé selon l'une des revendications 1 à 3, comprenant, préalablement à l'étape de remplissage de la rainure du raidisseur, une étape d'empilements successifs d'une couche d'électrode et d'une couche du moyen d'isolation électrique poreux, puis une étape d'enroulement des empilements réalisés autour d'un noyau de forme sensiblement complémentaire avec la cavité.

6. - Procédé selon l'une des revendications 1 à 5, comprenant une étape dans laquelle les couches d'électrode sont munies de moyens pour collecter l'énergie électrique ; une étape dans laquelle les moyens pour collecter l'énergie électrique d'un même pôle sont reliés ensemble à un tuyau (26, 27) creux comportant une ouverture en vis-à-vis de l'au moins un moyen de stockage et de restitution d'énergie électrique ; une étape dans laquelle l'électrolyte est injecté dans ledit tuyau de sorte à imprégner les couches d'électrode ; et une étape dans laquelle le tuyau est obstrué.

7. - Panneau (10) raidi comprenant une peau (11) et au moins un raidisseur (12) sensiblement allongé, ledit au moins un raidisseur comprenant une rainure (13) disposée dans le sens longitudinal et formant avec la peau une cavité (15), ledit panneau comportant au moins un moyen (19) de stockage et de restitution d'énergie électrique disposé à l'intérieur de la cavité, ledit panneau étant **caractérisé en ce qu'**il est issu du procédé selon l'une des revendications 1 à 6.

8. - Panneau selon la revendication 7, dans lequel l'au moins un moyen de stockage et de restitution d'énergie électrique est disposé à l'intérieur de la cavité de sorte à épouser des parois de ladite cavité.

9. - Panneau selon la revendication 7 ou la revendication 8, dans lequel l'au moins un moyen de stockage et de restitution d'énergie électrique est un supercondensateur.

10. - Panneau selon la revendication 9, dans lequel le supercondensateur comporte deux couches (20, 21) d'électrode disposées sensiblement parallèlement à une surface (14) de la peau, lesdites couches étant séparées entre elles par une couche (22) d'un moyen d'isolation électrique poreux.

11. - Panneau selon la revendication 10, dans lequel les couches du supercondensateur sont munies, à des extrémités opposées dans le sens transversal, d'un moyen (23) d'étanchéisation entre les couches d'électrode de sorte qu'un l'électrolyte dont sont imprégnées les couches d'électrode ne puisse s'écouler qu'à travers la couche du moyen d'isolation électrique poreux.

12. - Panneau selon la revendication 10 ou la revendication 11, dans lequel deux couches d'électrodes consécutives sont munies de moyens (23) pour collecter l'énergie électrique, disposés à l'opposé l'un de l'autre dans le sens transversal.

13. - Panneau selon la revendication 9, dans lequel le supercondensateur comporte deux couches d'électrode sensiblement disposées en spirale, lesdites couches étant séparées entre elles par une couche d'un moyen d'isolation électrique poreux.

14. - Panneau selon l'une des revendications 10 à 13, dans lequel deux couches d'électrode consécutives font saillie l'une par rapport à l'autre dans le sens longitudinal, lesdites saillies étant munies de moyens pour collecter l'énergie électrique.

## Patentansprüche

1. Verfahren zur Herstellung eines versteiften Paneels (10), das eine Außenhaut (11) und mindestens eine im Wesentlichen längliche Versteifung (12) umfasst, wobei die mindestens eine Versteifung eine Rille (13) umfasst, die in Längsrichtung angeordnet ist und mit der Außenhaut einen Hohlraum (15) bildet, wobei das Paneel mindestens ein Mittel (19) zur Speicherung und Rückgewinnung elektrischer Energie umfasst, das im Inneren des Hohlraums angeordnet ist, wobei das Verfahren einen Schritt des Auffüllens der Rille (13) der mindestens einen Versteifung (12) mit mindestens einem Mittel (19) zur Speicherung und Rückgewinnung elektrischer Energie umfasst; und einen Schritt des Bedeckens des mindestens einen Mittels zur Speicherung und Rückgewinnung elektrischer Energie durch die Außenhaut (11), so dass die Rille der Versteifung und die Außenhaut gemeinsam den Hohlraum (15) bilden.

2. Verfahren nach Anspruch 1, wobei das mindestens eine Mittel zur Speicherung und Rückgewinnung elektrischer Energie einen Kern bildet, auf dem die Haut während des Schritts des Bedeckens des mindestens einen Mittels zur Speicherung und Rückgewinnung elektrischer Energie drapiert wird.

3. Verfahren nach Anspruch 2, wobei:
- die Versteifung ein Verbundmaterial umfasst;
- der Schritt des Auffüllens der Rille der Versteifung mit einer vorpolymerisierten Versteifung durchgeführt wird; und
- der Schritt des Drapierens von einem Schritt des Aushärtens des versteiften Paneels gefolgt wird.

4. Verfahren nach einem der Ansprüche 1 bis 3, wobei der Schritt des Auffüllens der Rille der Versteifung mit aufeinanderfolgenden Stapeln einer Elektrodenschicht und einer Schicht eines porösen Mittels zur elektrischen Isolierung im Wesentlichen parallel zu der Oberfläche (14) der Außenhaut durchgeführt wird, die mit der Rille der mindestens einen Versteifung den Hohlraum bildet.

5. Verfahren nach einem der Ansprüche 1 bis 3, umfassend, vor dem Schritt des Auffüllens der Rille der Versteifung, einen Schritt des aufeinanderfolgenden Stapelns einer Elektrodenschicht und einer Schicht eines porösen Mittels zur elektrischen Isolierung, anschließend einen Schritt des Wickelns der gebildeten Stapel rund um einen Kern, der eine Form im Wesentlichen komplementär zu dem Hohlraum aufweist.

6. Verfahren nach einem der Ansprüche 1 bis 5, umfassend einen Schritt, in dem die Elektrodenschichten mit Mitteln zum Sammeln elektrischer Energie versehen werden; einen Schritt, in dem die Mittel zum Sammeln elektrischer Energie mit einem gleichen Pol gemeinsam mit einem hohlen Rohr (26, 27) verbunden werden, das eine Öffnung gegenüber dem mindestens einen Mittel zur Speicherung und Rückgewinnung elektrischer Energie umfasst; einen Schritt, in dem der Elektrolyt in das Rohr derart injiziert wird, dass die Elektrodenschichten imprägniert werden; und einen Schritt, in dem das Rohr verschlossen wird.

7. Versteiftes Paneel (10), welches eine Außenhaut (11) und mindestens eine im Wesentlichen längliche Versteifung (12) umfasst, wobei die mindestens eine Versteifung eine Rille (13) umfasst, die in Längsrichtung angeordnet ist und mit der Außenhaut einen Hohlraum (15) bildet, wobei das Paneel mindestens ein Mittel (19) zur Speicherung und Rückgewinnung elektrischer Energie umfasst, das im Inneren des Hohlraums angeordnet ist, wobei das Paneel **dadurch gekennzeichnet ist, dass** es durch ein Verfahren nach einem der Ansprüche 1 bis 6 hergestellt wird.

8. Paneel nach Anspruch 7, wobei das mindestens eine Mittel zur Speicherung und Rückgewinnung elektrischer Energie im Inneren des Hohlraums derart angeordnet ist, dass es an Wänden des Hohlraums anliegt.

9. Paneel nach Anspruch 7 oder Anspruch 8, wobei das mindestens eine Mittel zur Speicherung und Rückgewinnung elektrischer Energie ein Superkondensator ist.

10. Paneel nach Anspruch 9, wobei der Superkondensator zwei Elektrodenschichten (20, 21) umfasst, die im Wesentlichen parallel zu einer Oberfläche (14) der Außenhaut angeordnet sind, wobei die Schichten zwischen diesen durch eine Schicht (22) eines porösen Mittels zur elektrischen Isolierung getrennt sind.

11. Paneel nach Anspruch 10, wobei die Schichten des Superkondensators, an gegenüberliegenden Enden in Querrichtung, derart mit einem Mittel (23) zur Abdichtung zwischen den Elektrodenschichten versehen sind, das ein Elektrolyt, mit dem die Elektrodenschichten imprägniert sind, nicht quer über die Schicht des porösen Mittels zur elektrischen Isolierung fließen kann.

12. Paneel nach Anspruch 10 oder Anspruch 11, wobei zwei konsekutive Elektrodenschichten mit Mitteln (23) zur Sammlung elektrischer Energie versehen sind, die einander gegenüberliegend in Querrichtung angeordnet sind.

13. Paneel nach Anspruch 9, wobei der Superkondensator zwei Elektrodenschichten umfasst, die im Wesentlichen spiralförmig angeordnet sind, wobei die Schichten zwischen diesen durch eine Schicht eines porösen Mittels zur elektrischen Isolierung getrennt sind.

14. Paneel nach einem der Ansprüche 10 bis 13, wobei zwei konsekutive Elektrodenschichten die eine in Bezug auf die andere in Längsrichtung vorspringend angeordnet sind, wobei die Vorsprünge mit Mitteln zum Sammeln elektrischer Energie versehen sind.

## Claims

1. - A method of manufacturing a stiffened panel (10) comprising a skin (11) and at least one substantially elongated stiffener (12), said at least one stiffener comprising a groove (13) placed in the longitudinal direction and forming a cavity (15) with the skin, said panel comprising at least one means (19) for storing and releasing electrical energy, which means is placed inside the cavity, said method involving a step of filling the groove (13) of the at least one stiffener (12) with at least one means (19) of storing and releasing electrical energy; and a step of covering the at least one means of storing and releasing electrical energy with the skin (11), so that the groove of the stiffener and the skin together form the cavity (15).

2. - The method as claimed in claim 1, wherein the at least one means of storing and releasing electrical energy forms a core over which the skin is draped, during the covering step of the at least one means of storing and releasing electrical energy.

3. - The method as claimed in claim 2, wherein:
- the stiffener comprises a composite material;
- the step of filling the groove of the stiffener is performed with a precured stiffener; and,
- the draping step is followed by a step of curing the stiffened panel.

4. - The method as claimed in one of claims 1 to 3, wherein the step of filling the stiffener groove is performed by successive layering of an electrode layer and a layer of the porous electric insulating means substantially parallel to the surface (14) of the skin forming the cavity with the groove of the at least one stiffener.

5. - The method as claimed in one of claims 1 to 3, comprising, before the step of filling the stiffener groove, a step of successive layering of an electrode layer and a layer of the porous electric insulating means, then a step of winding the layering achieved around a core having a form substantially complementary with the cavity.

6. - The method as claimed in one of claims 1 to 5, comprising a step in which the electrode layers are provided with means for collecting the electrical energy; a step in which the means for collecting the electrical energy of a same pole are connected together to a hollow tube (26, 27) comprising an opening opposite the at least one means of storing and releasing electrical energy; a step in which the electrolyte is injected into said tube so as to impregnate the electrode layers; and a step in which the tube is plugged.

7. - A stiffened panel (10) comprising a skin (11) and at least one substantially elongated stiffener (12), said at least one stiffener comprising a groove (13) placed in the longitudinal direction and forming a cavity (15) with the skin, said panel comprising at least one means (19) for storing and releasing electrical energy, which means is placed inside the cavity, said panel being wherein it is derived from the method as claimed in one of claims 1 to 6.

8. - The panel as claimed in claim 7, wherein the at least one means of storing and releasing electrical energy is placed inside the cavity so as to mold to the walls of said cavity.

9. - The panel as claimed in claim 7 or claim 8, wherein the at least one means of storing and releasing electrical energy is an ultracapacitor.

10. - The panel as claimed in claim 9, wherein the ultracapacitor comprises two electrode layers (20, 21) placed substantially parallel to a surface (14) of the skin, said layers being separated one from the other by a layer (22) of a porous electrical insulation means.

11. - The panel as claimed in claim 10, wherein the layers of the ultracapacitor are provided, at two opposite extremities in the transverse direction, with a means (23) of sealing between the electrode layers, so that an electrolyte with which the electrode layers are impregnated can only flow through the layer of the porous electrical insulation means.

12. - The panel as claimed in claim 10 or claim 11, wherein two consecutive electrode layers are provided with means (23) for collecting the electrical energy, said means being placed opposite each other in the transverse direction.

13. - The panel as claimed in claim 9, wherein the ultracapacitor comprises two electrode layers substantially placed in a spiral, said layers being separated one from the other by a layer of a porous electrical insulation means.

14. - The panel as claimed in one of claims 10 to 13, wherein two consecutive electrode layers protrude, one relative to the other, in the longitudinal direction, said protrusions being provided with means for collecting the electrical energy.
